Europäisches Patentamt

European Patent Office

Office européen des brevets

(19)

(11) Veröffentlichungsnummer: **0 128 416**
**A2**

(12) **EUROPÄISCHE PATENTANMELDUNG**

(21) Anmeldenummer: **84105884.5**

(22) Anmeldetag: **23.05.84**

(51) Int. Cl.³: **H 04 M 9/08,** H 04 B 3/54,
H 04 M 11/00

(30) Priorität: **06.06.83 DE 3320397**

(43) Veröffentlichungstag der Anmeldung: **19.12.84**
**Patentblatt 84/51**

(84) Benannte Vertragsstaaten: **AT CH DE IT LI SE**

(71) Anmelder: **Siemens Aktiengesellschaft, Berlin und München Wittelsbacherplatz 2, D-8000 München 2 (DE)**

(72) Erfinder: **Frühauf, Waldemar, Dr. Dipl.-Ing., Clausewitzerstrasse 34, D-8500 Nürnberg (DE)**

(54) **Anordnung zur vermittelbaren Übertragung von Tonsignalen.**

(57) Mit der erfindungsgemäßen Anordnung können Tonsignale zwischen mehreren, über ein Stromnetz als Übertragungsleitung verbundenen Teilnehmerstationen übertragen werden. Dabei erfolgt die Übertragung der Tonsignale durch Frequenzmodulation einer Trägerfrequenz. Steuersignale, die zur Steuerung der Tonsignalübertragung und zur Vermittlung der Teilnehmerstationen untereinander erforderlich sind, werden durch Amplitudenmodulation derselben Trägerfrequenz übertragen. Damit wird nur ein Trägerfrequenzkanal belegt und es muß nur eine einzige Trägerfrequenz erzeugt werden.

SIEMENS AKTIENGESELLSCHAFT          Unser Zeichen
Berlin und München                  VPA 83 P 3173 E

Anordnung zur vermittelbaren Übertragung von Tonsignalen

Die Erfindung betrifft eine Anordnung zur vermittelbaren Übertragung von Tonsignalen zwischen mehreren, mit einer Übertragungsleitung verbundenen Teilnehmerstationen, wobei eine Übertragung von Tonsignalen und Steuersignalen durch Trägerfrequenzmodulation erfolgt.

Eine derartige Anordnung ist aus der DE-PS 29 46 177 bekannt. Dabei sind mehrere Teilnehmerstationen parallel an einem Übertragungsmedium angeordnet. Die Teilnehmerstationen können wahlweise miteinander in Verbindung treten, d.h. vermittelt werden. Zur Vermittlung erforderliche Steuersignale werden über besondere Steuerleitungen oder über gesonderte Übertragungskanäle auf demselben Übertragungsmedium wie die Tonsignale übertragen. Eine derartige Anordnung ist wegen der zur Steuersignalübertragung erforderlichen gesonderten Leitungen bzw. Übertragungskanäle verhältnismäßig aufwendig. Zur Verbindung der Teilnehmerstationen untereinander ist ein besonderes Leitungsnetz erforderlich.

Im Handel erhältlich sind Wechselsprechanlagen, die keine eigene Verbindungsleitung erfordern, da die Tonsignale mittels einer frequenzmodulierten Trägerfrequenz über das Lichtnetz übertragen werden. Diese Wechselsprechanlagen ermöglichen innerhalb ihrer Reichweite nur eine einzige Wechselsprechverbindung. Da die Reichweite meist über mehrere Haushalte reicht, ist das zur Übertragung vorgesehene Stromnetz auch in Nachbarhaushalten belegt und ein Abhören von Gesprächen jederzeit möglich. Eine Abhilfe ist möglich durch die Installation

Sid 2 Bim / 24.05.1983

von Trägerfrequenzsperren an der Netzeinspeisung in jedem Haushalt. Derartige Trägerfrequenzsperren können jedoch nur von einem zugelassenen Installateur eingebaut werden. Damit wird jedoch ein wesentlicher Vorteil der eigenleitungslosen Geräte - nämlich die Einsatzmöglichkeit ohne jegliche Installationsarbeit - aufgegeben.

Aufgabe der Erfindung ist es daher, eine Anordnung der eingangs genannten Art so auszugestalten, daß eine vermittelbare Übertragung ohne gesonderte Steuerkanäle möglich ist.

Diese Aufgabe wird erfindungsgemäß dadurch gelöst, daß als Übertragungsleitung das Stromnetz verwendet wird und daß die Tonsignale durch Frequenzmodulation der Trägerfrequenz und die Steuersignale durch Amplitudenmodulation derselben Trägerfrequenz übertragen werden.

Sowohl die Tonsignale als auch die Steuersignale werden also über das Stromnetz mit derselben Trägerfrequenz übertragen. Damit wird der Aufwand gering gehalten, da nur eine Träerfrequenz erzeugt werden muß. Ferner ist vorteilhaft, daß nur ein Übertragungskanal belegt wird, da im Stromnetz nur eine begrenzte Anzahl von Übertragungskanälen realisiert werden kann.

Zum Aufbau einer Sprechverbindung sendet eine erste Teilnehmerstation in einem Suchvorgang ein Steuersignal mit einem Adreßcode für eine gewünschte zweite Teilnehmerstation, wobei die den zutreffenden Adreßcode empfangende Teilnehmerstation ein Quittungssignal sendet, sofern die Übertragungsleitung nicht belegt ist und wobei die Verbindung endgültig aufgebaut wird, wenn in der zweiten Teilnehmerstation ein Rückruf ausgelöst wird. Durch diese Aufbausequenz wird eine Sprechverbindung zwischen zwei Stationen nur durch aktive Handlungen an beiden Teilnehmerstationen hergestellt, so daß ein Abhören von bestehenden Verbindungen mit gleichartigen Geräten ausgeschlossen ist.

Jedes Steuersignal kann außer einem frei wählbaren Adreßcode auch einen einstellbaren Hauscode aufweisen, der die
Verbindungsmöglichkeit auf eine Teilnehmergruppe mit demselben Hauscode begrenzt.

Vorteilhafterweise kann die Bedeutung jedes Steuersignals durch die Kombination von Hauscode und Adreßcode
sowie entsprechender Pausen festgelegt sein. Damit müssen keine gesonderten Steuercodes gewählt werden. Die
Bedeutung jedes Steuersignals kann dabei wie folgt festgelegt sein:

a) Hauscode und Adreßcode werden gesendet während des
   Suchvorgangs und zur Quittierung;
b) eine Pause (anstelle des Hauscodes) und Adreßcode
   werden gesendet, um die Sprechberechtigung zu wechseln.
c) Hauscode und eine Pause (anstelle des Adreßcodes)
   werden gesendet, um die Verbindung abzubrechen.

Die Steuersignale werden vorteilhafterweise jeweils in
der Umgebung der Netzspannungsnulldurchgänge gesendet.
Damit erfolgt eine netzsynchrone Übertragung.

Vorteilhafterweise wird während einer Sprechverbindung
der frequenzmodulierte Träger kurzzeitig unterbrochen,
wobei die auf Empfang geschaltete Teilnehmerstation während der Unterbrechungszeit Steuersignale senden kann.
Damit kann also die auf Empfang geschaltete Teilnehmerstation z.B. einen Wechsel der Gesprächsrichtung herbeiführen.

Die Unterbrechung des frequenzmodulierten Trägers kann dabei dann erfolgen, wenn sowohl die Amplitude des Tonsignals als auch ihr zeitlicher Differentialquotient klein sind. Die Unterbrechung des frequenzmodulierten Trägers erfolgt also dann, wenn ein Sprachlaut zu Ende geht und die kurzzeitige Abschaltung der Trägerfrequenz keine Knackstörung hervorruft.

Zur Erfassung der genannten Bedingung für die Unterbrechung des frequenzmodulierten Trägers werden vorteilhafterweise das Tonsignal und das differenzierte Tonsignal gleichgerichtet, die gleichgerichteten Signale addiert und das Summensignal in einem Komparator mit einem Mindestwert verglichen, wobei die Unterbrechung des frequenzmodulierten Trägers erfolgt, wenn das Summensignal unter dem Mindestwert liegt.

Der Mindestwert kann abhängig von der Einstellung eines Lautstärkeeinstellers der betreffenden Teilnehmerstationen sein. Damit erfolgt auch bei hohen Umgebungsgeräuschen eine Abschaltung der Trägerfrequenz, da bei hohen Umgebungsgeräuschen auch die Einstellung einer erhöhten Lautstärke anzunehmen ist.

Der Mindestwert kann nach jeder Unterbrechung des frequenzmodulierten Trägers zeitabhängig erhöht werden, indem der Vergleichseingang des Komparators mit einem über einen Widerstand aufladbaren Kondensator verbunden ist. Damit wird auch bei lauter Umgebung in gewissen Abständen eine Unterbrechung des frequenzmodulierten Trägers erzwungen, wobei das dadurch erzeugte Knackgeräusch aufgrund des ohnehin vorhandenen Geräuschpegels kaum stört.

Vorteilhafterweise ist dem Komparator ein D-Flip-Flop nachgeschaltet, dessen Setzeingang mit dem Komparator

0128416

verbunden ist und dessen Steuereingang in dem Zeitbereich angesteuert wird, in dem Steuersignale zugelassen
werden, wobei der Setzausgang des D-Flip-Flops die
Unterbrechung des frequenzmodulierten Trägers steuert
und der Rücksetzeingang des D-Flip-Flops über eine
Diode mit dem Kondensator verbunden ist.

Suchvorgang bzw. Rückruf der Teilnehmerstationen können
ausgelöst werden, wenn das vorhandene Sprachsignal eine
vorgegebene Amplitude übersteigt. Der Verbindungsaufbau
und der Gesprächsrichtungswechsel erfolgt damit sprachgesteuert, so daß freies Wechselsprechen ohne manuelle
Betätigung bei den Teilnehmerstationen möglich ist. Ferner ist mit einer derart gesteuerten Teilnehmerstation
beispielsweise eine Kinderzimmerüberwachung möglich,
wobei eine Verbindung nur hergestellt wird, wenn Geräusche übertragen werden sollen.

Suchvorgang bzw. Rückruf können dabei durch die Ausgänge
des D-Flip-Flops ausgelöst werden und das Abbrechen der
Verbindung durch ein Zeitglied gesteuert werden.

Vorteilhafterweise weist jede Teilnehmerstation mindestens eine Sprechtaste und eine Endetaste auf, wobei mit
der Sprechtaste eine Sprechverbindung aufgebaut bzw. ein
Rückruf ausgelöst wird und mit der Endetaste eine bestehende Verbindung abgebrochen wird. Mit diesen Tasten erfolgt eine manuelle Steuerung des Verbindungsaufbaus
bzw. des Gesprächsrichtungswechsels.

Im Wechselsprechbetrieb wird die Sprechberechtigung vorteilhafterweise durch Antippen der Sprechtaste der betreffenden Teilnehmerstation aufgebaut und besteht solange, bis entweder bei der verbundenen Teilnehmerstation die S-Taste gedrückt wird oder bei einer der beiden
miteinander verbundenen Teilnehmerstationen die Ende-
Taste gedrückt wird. Während des Sprechens ist also

0128416

nicht - wie bei herkömmlichen Wechselsprechanlagen - ein dauernder Tastendruck erforderlich. Da die Teilnehmerstationen automatisch nur eine Sprechrichtung zulassen, ist eine Kollision durch Sprechwunsch beider Teilnehmer nicht möglich.

Das Tonsignal kann vor der Aussendung über einen Verstärker mit logarithmischer Verstärkungscharakteristik und beim Empfang über einen Verstärker mit spiegelbildlicher Verstärkungscharakteristik geführt werden. Damit werden kleine Signale vor der Übertragung überproportional angehoben, so daß der Geräuschspannungsabstand vergrößert wird. Außerdem kann man mit einem Fremdgerät, das die entsprechende Verstärkercharakteristik nicht aufweist, das so übertragene Signal nur stark verzerrt abhören.

Schaltungsmäßig kann die logarithmische Kennlinie einfach durch eine Knickkennlinie angenähert werden.

Eine weitere Erhöhung der Abhörsicherheit wird erreicht, wenn das Tonsignal beim Senden im Netzrhythmus invertiert wird, und zwar netzsynchron zu Zeitpunkten, deren Abstand vom Nulldurchgang der Netzspannung durch den Hauscode bestimmt ist und beim Empfang die Inversion wieder rückgängig gemacht wird. Damit wird ein Abhören einer bestehenden Verbindung auch mit gleichartigen Teilnehmerstationen, die jedoch einen anderen Hauscode aufweisen, unmöglich.

Die Trägerfrequenzen können in allen Teilnehmerstationen von der Netzfrequenz abgeleitet werden. Damit werden die Trägerfrequenzen aller Teilnehmerstationen synchron, so daß Störgeräusche beim Signalaustausch und beim Gesprächsrichtungswechsel vermieden werden. Schaltungsmäßig kann die Ableitung mit einer PLL-Schaltung mit einem Frequenzteiler im Rückkopplungszweig einfach realisiert werden.

Jede Teilnehmerstation kann zwei Lichtsignale aufweisen, wobei das erste Lichtsignal aufleuchtet, solange die zugeordnete Teilnehmerstation Sprechberechtigung hat, wobei das zweite Lichtsignal aufleuchtet, solange die entsprechende Teilnehmerstation Verbindung mit einer zweiten Teilnehmerstation hat, sofern diese zweite Teilnehmerstation Sprechberechtigung hat und wobei beide Lichtsignale zur Bildung eines Mischlichts während des Aufbaus einer Verbindung aufleuchten. Dabei ist zweckmäßigerweise das erste Lichtsignal grün und das zweite Lichtsignal rot. Damit wird der jeweilige Zustand der Verbindung einprägsam signalisiert.

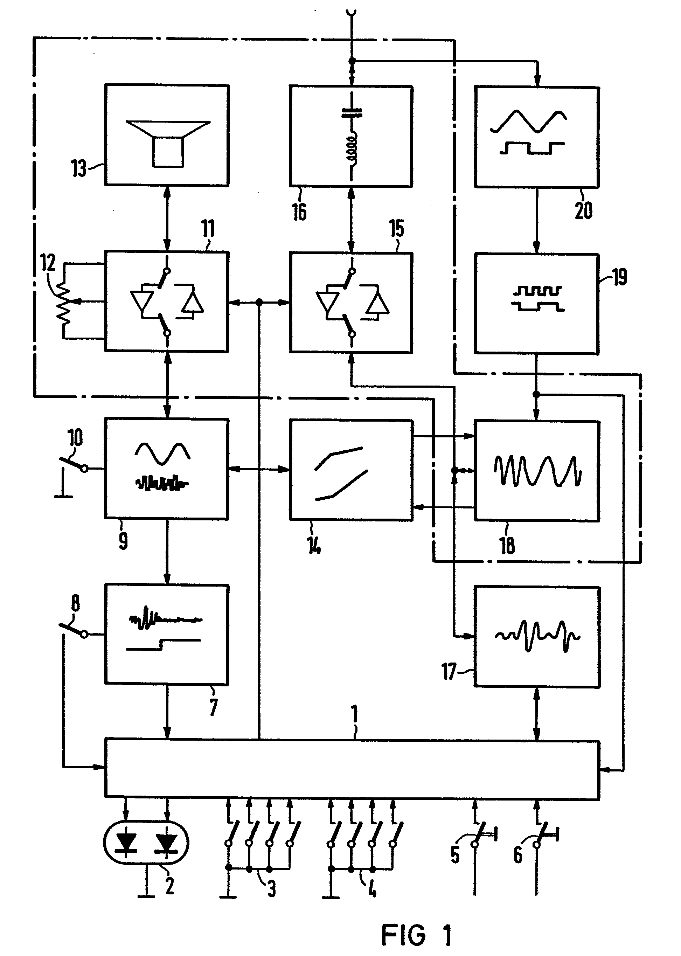

Ein Ausführungsbeispiel der Erfindung wird nachfolgend anhand der Figuren 1 bis 9 näher erläutert.

Fig. 1 zeigt ein Blockschaltbild einer Teilnehmerstation.

Die Elemente werden zunächst bezüglich der Senderichtung erläutert. Ein Mikrofon 13 ist über einen bidirektionalen Verstärker 11, einen Scrambler 9 und einen Momentanwertkompander 14 mit dem Eingang eines Frequenzmodulators 18 verbunden. Der Ausgang des Frequenzmodulators 18 ist über einen weiteren bidirektionalen Verstärker 15 und eine Netzankoppelschaltung 16 mit dem Stromnetz verbunden. Der bidirektionale Verstärkers 15 wird außerdem von einem Amplitudenmodulator 17 angesteuert, an dessen Eingang Steuersignale der Steuereinheit 1 anstehen.

Der Empfang von Signalen erfolgt mit denselben Elementen, wobei die Verstärkungsrichtung der beiden bidirektionalen Verstärker 11 und 15 umgeschaltet wird, die Modulatoren 17 und 18 als Demodulatoren wirken, der Momentanwertkompander 14 als Momentanwertexpander wirkt, der Scrambler 9 als Descrambler wirkt und das Mikrofon 13 als Lautsprecher wirkt.

Zur Vorgabe einer Trägerfrequenz für den Frequenzmodulator 18 enthält die Teilnehmerstation außerdem einen mit dem Stromnetz gekoppelten Nullspannungsdetektor 20, der einen Taktgenerator 19 zur Bildung netzsynchroner Takte steuert. Die vom Taktgenerator 19 gebildeten Takte werden dem Frequenzmodulator 18 und der Steuereinheit 1 zugeführt.

Ferner enthält die dargestellte Teilnehmerstation eine Spracherkennungsschaltung 7, mit der erfaßt wird, ob am Ausgang des Verstärkers 11 ein Sprachsignal ansteht und die ein Steuersignal für die Steuereinheit 1 liefert.

Der Scrambler 9 kann mit einem Schalter 10 außer Betrieb gesetzt werden. Die Spracherkennungsschaltung 7 kann über einen Schalter 8, dessen Funktion noch erläutert wird, mit einem weiteren Steuereingang der Steuereinheit 1 verbunden werden. Mit weiteren Eingängen der Steuerschaltung 1 sind außerdem eine Schaltergruppe 3 zur Einstellung eines Hauscodes, eine Schaltergruppe 4 zur Wahl eines Adreßcodes, eine Sprechtaste 5 und eine Ende-Taste 6 verbunden.
Ferner weist die Steuereinheit 1 zwei Ausgänge auf, die mit einer Leuchtdiodenkombination 2 verbunden sind.

In Fig. 1 sind die Teile, die bereits in den herkömmlichen, nicht vermittelbaren eigenleitungslosen Wechselsprechstellen vorhanden sind, gestrichelt umrandet.

Im folgenden werden die Elemente des Blockschaltbildes nach Fig. 1, soweit sie nicht ohnehin allgemein bekannt sind, näher erläutert.

Die Steuerlogik 1 sendet zum Aufbau einer Sprechverbindung, beim Gesprächsrichtungswechsel und zum Abbruch einer Verbindung Steuersignale, die mit dem Amplitudenmodulator 17 auf eine Trägerfrequenz moduliert und dann auf das Stromnetz gesendet werden. Die zum Aufbau einer Verbindung notwendige Reihenfolge von Steuersignalen ist in der auf der nächsten Seite folgenden Tabelle 1 dargestellt, und zwar für den Fall, daß ein Teilnehmer A mit seiner Station a eine Verbindung zu einer Station b aufbaut, die von einem Teilnehmer B bedient wird.

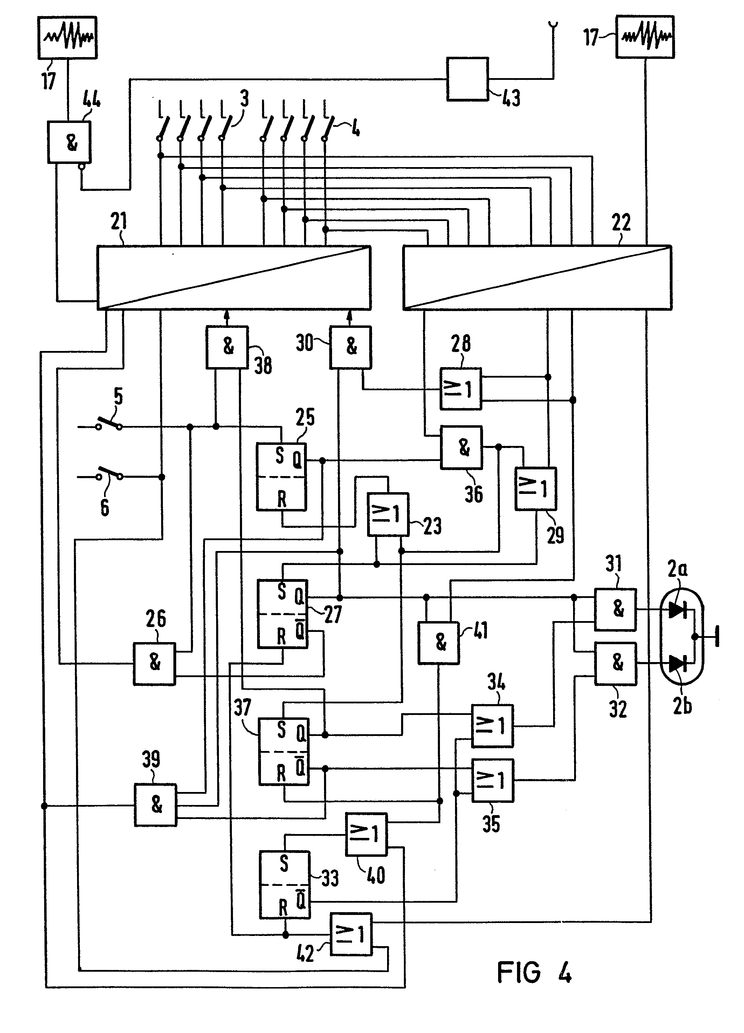

Ein detailliertes Blockschaltbild der Steuerlogik ist in Fig. 4 dargestellt. Der Empfangskanal 14 ist über das im Empfangsweg als Demodulator wirkende Element 17 mit einem Decoder 22, der Sendekanal über das im Sendekanal als Modulator wirkende Element 17 und ein UND-Gatter 44 mit einem Coder 21 verbunden. Ferner sind Coder 21 und Decoder 22 mit den Codierschaltern 3, 4 für Hauscode und Adreßcode verbunden. Der Verbindungsaufbau wird mit einer Sprechtaste 5, der Abbruch der Verbindung mit einer Ende-Taste 6 gesteuert. Eine Zweifarbenleuchtdiode 2 zeigt den jeweiligen Status der Verbindung an. Sobald der Teilnehmer A die Sprechtaste 5 drückt, wird das Flip Flop 25 gesetzt. Das Flip Flop 25 speichert den durch die Sprechtaste 5 vorgegebenen Befehl ab, bis er im Gerät ausgeführt ist, so daß ein kurzer Tastendruck zur Befehlsausführung genügt. Außerdem wird bei Tastendruck über ein UND-Gatter 26 ein Signal auf den Coder 21 gegeben, sofern das mit dem zweiten Eingang des UND-Gatters 26 verbundene, noch zu erläuternde, Flip Flop 27 noch nicht gesetzt ist. Mit diesem Signal löst der Coder 21 einen Suchvorgang aus. Ein Suchsignal wird über das UND-Gatter 44 und den Modulator 17 gesendet, wenn der Übertragungsweg noch nicht belegt ist. Dazu wird mit einem Detektor 43 erfaßt, ob auf dem Übertragungsweg bereits ein Trägerfrequenzsignal vorhanden ist. Falls dies der Fall ist, blockiert der mit einem negierenden Eingang des UND-Gatters 44 verbundene Detektor 43 die Signalabgabe an den Modulator 17. Ansonsten wird ein Suchsignal mit einem Hauscode und einem Adreßcode gesendet. Dabei dient der Hauscode, wie im folgenden noch näher ausgeführt wird, der Begrenzung der Verbin-

0128416

VPA 83 P 31 7 3 E

- 10 -

Statusanzeige "A":        gelb              rot        grün        gelb        aus

A drückt S-Taste
a sendet "suchen"
b sendet "bereit"
A ruft oder spricht
B drückt S-Taste
b sendet "wechsel"
B spricht
A drückt S-Taste
a sendet "wechsel"
A spricht
A drückt E-Taste
a sendet "ende"
b sendet "ende"

Statusanzeige "B":        gelb    rot      grün        rot        gelb        aus

Tab. 1

dungsmöglichkeiten auf einen bestimmten Übertragungsbereich, während mit dem wählbaren Adreßcode eine bestimmte Teilnehmerstelle in diesem Übertragungsbereich
angewählt werden soll.

Eine Station b, die auf den entsprechenden Hauscode und
Adreßcode programmiert ist, empfängt über den Decoder 22
dieses Suchsignal und setzt über ein ODER-Gatter 29 das
Flip Flop 27. Ferner wird über ein ODER-Gatter 28 und
ein UND-Gatter 30 über den Coder 21 ein Quittierungssignal
ausgelöst. Die UND-Bedingung für das UND-Gatter 30 ist
erfüllt, da das mit seinem zweiten Eingang verbundene
Flip Flop 27 gesetzt wurde. Bei gesetztem Flip Flop 27
werden über die UND-Gatter 31 und 32 die Leuchtdioden 2a
und 2b angesteuert. Die UND-Bedingungen für die UND-Gatter 31 und 32 sind erfüllt, da das Flip Flop 33 noch nicht
gesetzt ist. Über den invertierten Ausgang des Flip Flops
33 und die ODER-Gatter 34 und 35 wird daher den UND-Gattern 31 und 32 jeweils ein "Eins"-Signal zugeführt. Da
sowohl die grüne Leuchtdiode 2a als auch die rote Leuchtdiode 2b leuchtet, entsteht eine Mischfarbe gelb.

Die Station a empfängt das Quittungssignal über den Decoder 22 und setzt über ein UND-Gatter 36 und ein ODER-
Gatter 29 das Flip Flop 27 und direkt über das UND-Gatter 36 das Flip Flop 37. Die UND-Bedingung des UND-Gatters 36 ist erfüllt, da auf Grund der vorangehenden Betätigung der Sprechtaste 5 das mit seinem zweiten Eingang verbundene Flip Flop 25 gesetzt ist. Gleichzeitig
wird über das ODER-Gatter 23 das Flip Flop 25 zurückgesetzt. Durch Setzen des Flip Flops 37 wird eine Sprechberechtigung für die Station A abgespeichert. Durch das
gesetzte Flip Flop 27 und das noch nicht gesetzte Flip
Flop 33 werden wie in der Station b die beiden Leuchtdioden 2a und 2b angesteuert, so daß sich ebenfalls die
Mischfarbe gelb ergibt. Damit wird signalisiert, daß die
Verbindung möglich, aber noch nicht ganz aufgebaut ist, da sich der Teilnehmer B noch nicht gemeldet hat. Der Teilnehmer A kann nun sprechen, oder durch Drücken seiner Sprechtaste 5 über das UND-Gatter 38 einen Rufton auslösen. Die UND-Bedingung des UND-Gatters 38 ist erfüllt, da das mit seinem zweiten Eingang verbundene Flip Flop 37 gesetzt ist.

Wenn der Teilnehmer B seine Sprechtaste 5 drückt, wird in der Station b ebenfalls das Flip Flop 25 gesetzt. Durch das gesetzte Flip Flop 25 wird über das UND-Gatter 39 und den Coder 21 ein Wechselsignal gesendet. Die UND-Bedingung des UND-Gatters 39 ist erfüllt, da das mit seinem zweiten Eingang verbundene Flip Flop 27 bereits gesetzt war und das mit seinem dritten Eingang verbundene Flip Flop 37 noch nicht gesetzt ist. Mit dem Wechselsignal wird außerdem über das ODER-Gatter 40 das Flip Flop 33 gesetzt. Damit ist nun die Verbindung zwischen den Teilnehmern A und B endgültig aufgebaut und der Teilnehmer B hat die Sprechberechtigung. In der Station b wird nun über das UND-Gatter 31 die grüne Leuchtdiode 2a angesteuert, da der erste Eingang des UND-Gatters 31 über das gesetzte Flip Flop 27 und der zweite Eingang des UND-Gatters 31 über das ebenfalls gesetzte Flip Flop 37 und das ODER-Gatter 34 jeweils ein "Eins"-Signal bekommen. Dadurch wird dem Teilnehmer B die Sprechberechtigung signalisiert.

Die Station a empfängt das Wechselsignal, so daß über das UND-Gatter 41 und das ODER-Gatter 40 das Flip Flop 33 gesetzt wird. Die UND-Bedingung des UND-Gatters 41 ist erfüllt, weil das Flip Flop 27 noch gesetzt ist. Über das UND-Gatter 32 wird in der Station a die rote Leuchtdiode 2b angesteuert. Am ersten Eingang des UND-Gatters 32 steht nämlich das "Eins"-Signal des gesetzten Flip Flops 27 und am zweiten Eingang steht über das ODER-Gatter 35 das am invertierten Ausgang des noch nicht gesetzten Flip Flops 37 anstehende "Eins"-Signal an. Damit erfährt der Teilnehmer A, daß die Verbindung aufgebaut ist und er die Sprechberechtigung hat.

Wenn nun der Teilnehmer A wieder sprechen will, so drückt er seine Sprechtaste 5, so daß wie vorher für die Station b beschrieben, ein Wechselsignal gesendet wird und damit die Gesprächsrichtung umgekehrt wird.

Wenn ein Teilnehmer die Verbindung beenden will, so drückt er die "Ende"-Taste 6, so daß über den Coder 21 ein "Ende"-Signal gesendet wird. Gleichzeitig werden in der eigenen Station über ein ODER-Gatter 42 die Flip Flops 33 und 27 zurückgesetzt. Die Gegenstation empfängt über den Decoder 22 das "Ende"-Signal, das ebenfalls über das ODER-Gatter 42 die Flip Flops 33 und 27 zurücksetzt. Damit verlöschen die Leuchtdioden 2a und 2b.

Während des Sprechens ist also kein dauernder Tastendruck erforderlich. Es genügt ein kurzes Antippen der Sprechtaste bei Gesprächsübernahme, ansonsten sind die Hände des Bedieners frei. Da die Teilnehmerstationen automatisch nur eine Sprechrichtung zulassen, wird ein Nachteil herkömmlicher Wechselsprechanlagen vermieden. Bei diesen ist nämlich im allgemeinen während der gesamten Dauer des Sprechens eine Sprechtaste zu drücken. Wenn jedoch beide Gesprächspartner gleichzeitig die Sprechtaste drücken, so ist keine Übertragung möglich. Bei diesen herkömmlichen Anlagen ist also zur Führung eines einwandfreien Wechselgesprächs eine gewisse Übung erforderlich.

Der jeweilige Status der Verbindung wird durch die Statusanzeige 2 einprägsam angezeigt. Dabei bedeutet "grün" die Sprechberechtigung, "rot" die Sprechberechtigung der Gegenstelle und "gelb" den Aufbau einer Verbindung.

Wie bereits ausgeführt, enthalten die Steuersignale einen Hauscode und einen Adreßcode. Der Hauscode muß für alle Geräte, mit denen eine Verbindung aufgenommen werden soll, gleich eingestellt werden. Damit kann die Möglichkeit einer Verbindung auf einen bestimmten Teilnehmerkreis, z.B. einen Haushalt begrenzt werden. Eine Verbindung zwischen Nachbarn, die gleichartige Geräte benutzen und den gegenseitigen Hauscode nicht kennen oder nach Absprache bewußt verschiedene Hauscodes benutzen, ist damit ausgeschlossen. Damit können gleichartige Anlagen in Nachbarhaushalten ohne Trägerfrequenzsperren und damit ohne Installationsaufwand betrieben werden.

Wenn ein (böswilliger) Nachbar den Hauscode des anderen in Erfahrung bringt, kann er mit einem gleichartigen Gerät eine bestehende Verbindung im Nachbarhaushalt nicht abhören, da seine Teilnehmerstation den Verbindungsaufbau nicht durchlaufen hat. Wenn noch keine Verbindung besteht, kann er eine Teilnehmerstation des Nachbarn anwählen. Er bekommt aber zunächst, ohne Antwort des Teilnehmers im Nachbarhaushalt, nur die Ruf- und Sprechberechtigung. Der Nachbar erkennt jedoch nunmehr den unberechtigten Teilnehmer und kann die Verbindung wieder abbrechen.

Der Adreßcode ermöglicht die Herstellung verschiedener Verbindungen bzw. die Vermittlung von Teilnehmerstellen im gleichen Haushalt. Er entspricht der Teilnehmernummer bei üblichen Telefonen.

Wenn ein von einem ersten Teilnehmer mit einem bestimmten Adreßcode angewählter zweiter Teilnehmer bereits mit einem dritten Teilnehmer eine Verbindung hat, so kann dies beim ersten Teilnehmer optisch gemeldet werden, z.B durch Blinken der Statusanzeigen. Der erste Teilnehmer hat aber in dringenden Fällen die Möglichkeit eine bestehende Verbindung zu unterbrechen, indem er seine Ende-Taste drückt. Dann kann er durch Drücken seiner Sprechtaste selbst eine Verbindung aufbauen.

Für die dargestellten Funktionen sind vier verschiedene Steuersignale erforderlich, nämlich für den Suchvorgang, für die Quittierung, für den Wechsel der Sprechberechtigung und für das Abbrechen der Verbindung. Zur Übermittlung dieser Funktionen können die Steuersignale zusätzlich zum Haus- und Adreßcode weitere Bit enthalten. Um das Steuersignal kurz zu halten, kann aber zur Übermittlung der genannten Funktionen auch eine Kombination von Haus- und Adreßcode mit Trägerfrequenzpausen benutzt werden. Dabei können den einzelnen Funktionen folgende Kombinationen zugeordnet werden:

Suchvorgang: Hauscode und Adreßcode werden gesendet.
Quittierung: Wie Suchvorgang
Wechsel der Sprechberechtigung: Pause (an der Stelle des Hauscode) und Adreßcode
Abbrechen der Verbindung: Hauscode und Pause (an der Stelle der Adresse).

Dabei wird die Tatsache ausgenutzt, daß zum Wechsel der Sprechverbindung und für das Abbrechen der Sprechverbindung Hauscode bzw. Adreßcode nicht mehr erforderlich sind. Im Ausführungsbeispiel weisen Hauscode und Adreßcode jeweils 4 Bit auf. Es kann jedoch vorteilhaft sein, jeweils nicht alle der jeweils möglichen 16 Kombinationen auszunutzen. Eine damit gegebene Redundanz erlaubt den Aufbau von Konferenzschaltungen und Sammelrufen und ermöglicht schaltungstechnische Vereinfachungen.

Die Steuersignale werden jeweils netzsynchron übertragen, und zwar bevorzugt in der Umgebung der Netzspannungsnulldurchgänge. Dabei kann z.B. eine Zeit von 1,67 msek

0128416

in der Umgebung der Netzspannungsnulldurchgänge als Steuerzeit, in der ein Telegramm von 8 Bit mit je 208 $\mu$s-Breite übertragen werden kann, definiert werden. Das notwendige netzsynchrone Übertragungsverfahren ist in der deutschen Patentanmeldung 32 15 081 erläutert.

Um einen Wechsel der Sprechberechtigung in zwei miteinander verbundenen Stationen durchführen zu können, muß auch die gerade auf "Sprechen" geschaltete Teilnehmerstation in der Lage sein, ein Steuersignal von der anderen Teilnehmerstation zu empfangen. Wenn der durch das Sprachsignal modulierte Träger dauernd gesendet wird, so ist das auf der gleichen Trägerfrequenz schwierig. Dieses Problem wird dadurch gelöst, daß in den modulierten Träger gezielt kurze Pausen eingefügt werden, die von der auf Empfang geschalteten Station erkannt und bei Bedarf mit einem Steuersignal ausgefüllt werden können. Derartige Pausen des modulierten Trägers führen natürlich auch zu einer Unterbrechung des Sprechsignals und zu einer entsprechenden Störung, wenn die Amplitude des Sprechsignals nicht gerade sehr klein oder Null ist.

Im Ausführungsbeispiel weist daher jede Teilnehmerstation eine Einrichtung auf, die eine Unterbrechung des modulierten Trägers nur zuläßt, wenn die Amplitude des Sprechsignals im Unterbrechungszeitraum zumindest mit hoher Wahrscheinlichkeit gering ist. Eine exakte Ermittlung der Amplitude des Sprachsignals während der Unterbrechungszeit wäre nur mit einer elektronischen Verzögerung des Sendesignals möglich und damit aufwendig. Eine Unterbrechung des modulierten Trägers wird nur zugelassen, wenn sich das Sprachsignal asymptotisch der Null-Linie nähert, also wenn nicht nur das Sprach-signal, sondern auch seine Steigung (d.h. sein zeitli-cher Differentialquotient) klein wird.

0128416

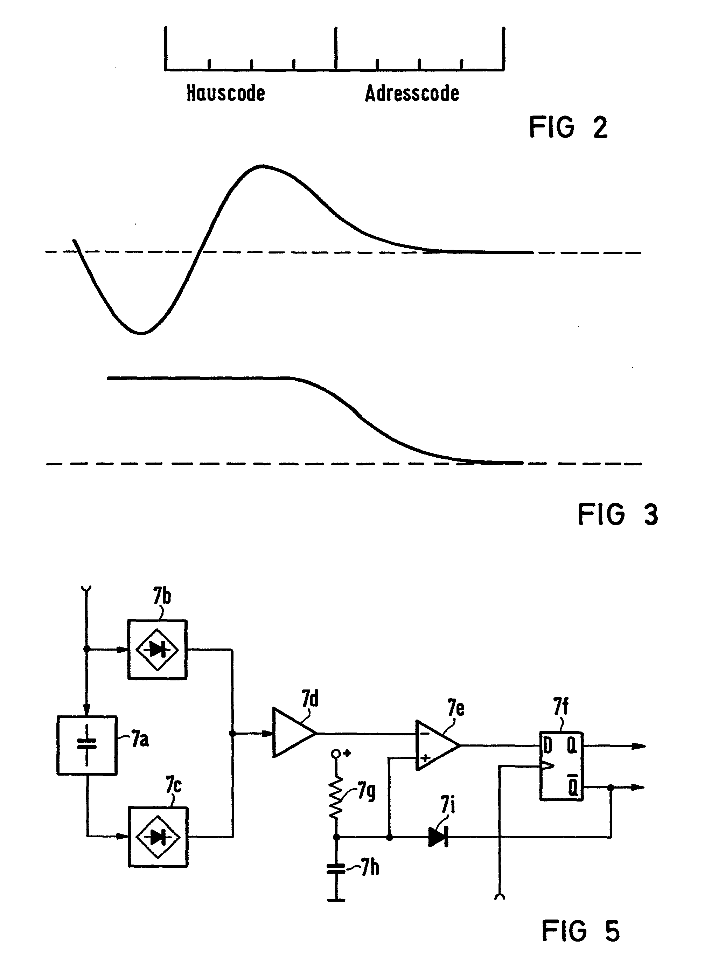

In Fig. 3 sind zwei derartige Fälle dargestellt. Mit diesem Kriterium wird erkannt, daß ein Sprachlaut zu Ende geht. Mit hoher Wahrscheinlichkeit folgt dann eine Pause, in der eine kurzzeitige Abschaltung des modulierten Trägers keine Knackstörung hervorrufen kann, wenn die Trägerfrequenzen in den beiden Teilnehmerstationen exakt übereinstimmen. Dies wird mit einer noch zu erläuternden Schaltung erreicht.

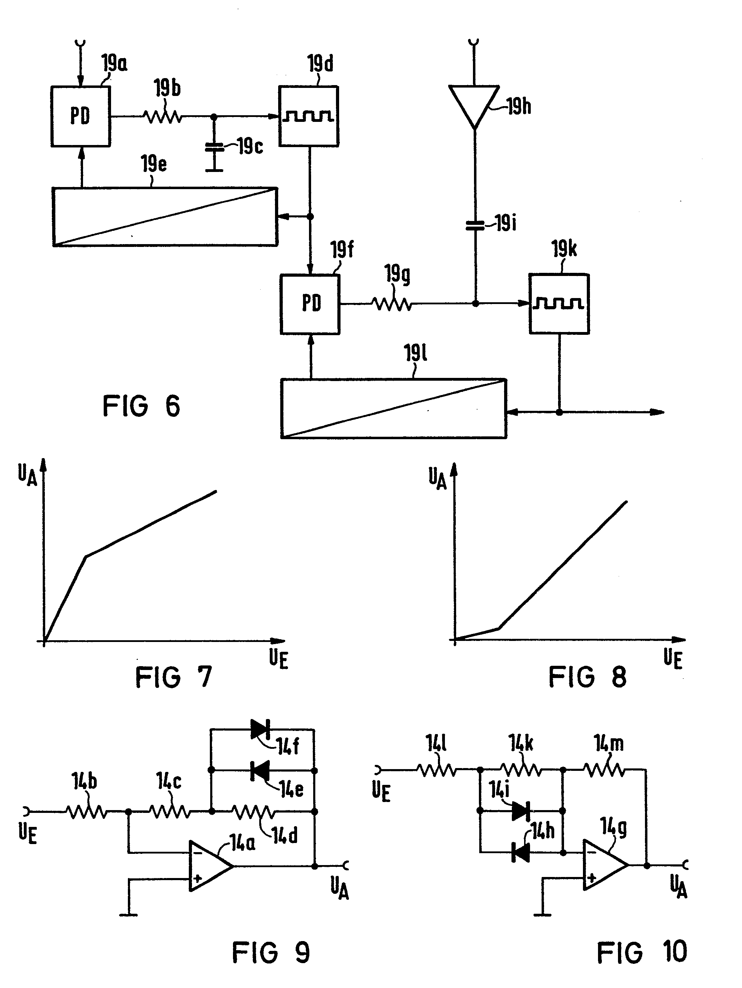

Die asymptotische Annäherung des Sprachsignals an den Nullpunkt kann mit einer Spracherkennungsschaltung nach Fig. 5 erkannt werden. Dabei wird das Sprachsignal einem ersten Gleichrichter 7b direkt und einem zweiten Gleichrichter 7c über ein Differenzierglied 7a zugeführt. Mit einem Summierverstärker 7d werden das gleichgerichtete Sprachsignal und das differenzierte gleichgerichtete Sprachsignal addiert und einem Eingang eines Komparators 7e zugeführt. Der Komparator 7e vergleicht das Summensignal mit einem Mindestwert.

Dieser Mindestwert muß der Umgebungslautstärke bei der auf "Sprechen" geschalteten Teilnehmerstation angepaßt werden, da sonst bei hohem Umgebungsgeräusch der Mindestwert nicht unterschritten wird und somit kein Signalaustausch möglich ist. Ein Signalaustausch soll jedoch zumindest dann möglich sein, wenn der gerade Sprechende eine kurze Pause macht. Die Einstellung des Mindestwertes könnte durch das bei jeder Teilnehmerstation ohnehin vorhandene Lautstärkeeinstellpotentiometer erfolgen, wobei man dann dem Vergleichseingang des Komparators eine von diesem Lautstärkeeinstellpotentiometer abgegriffene Spannung zuführen würde. Es ist davon auszugehen, daß in einer lauten Umgebung die Lautstärke auch höher eingestellt wird. In Fig. 5 ist jedoch eine Schaltungsmöglichkeit dargestellt, bei der der Mindestwert automatisch verschoben wird. Dabei ist ein Kondensator 7h über einen Widerstand 7g an eine positive Spannung gelegt, wobei
der Verbindungspunkt von Kondensator 7h und Widerstand
7g mit dem Vergleichseingang des Komparators 7e verbunden ist. Der Ausgang des Komparators 7e ist mit dem
Setzeingang eines D-Flip-Flops 7f verbunden. Am Takteingang des D-Flip-Flops steht im Bereich der Netzspannungsnulldurchgänge ein Signal für die bereits erläuterte Steuerzeit an, in der die Übertragung der Steuersignale netzsynchron erfolgen soll. Am Setzausgang Q
des D-Flip-Flops 7f steht ein Signal an, mit dem die
Unterbrechung des modulierten Trägers durchgeführt wird.
Der Rücksetzeingang $\overline{Q}$ des D-Flip-Flops 7f ist über eine
Diode 7i mit dem Verbindungspunkt von Kondensator 7h und
Widerstand 7g verbunden.

Bei der bisher beschriebenen Funktion wurde der Verbindungsaufbau mit Hilfe der Sprech- bzw. Ende-Taste durchgeführt. In manchen Fällen ist es jedoch zweckmäßig,
eine Verbindung mit einer vorgewählten Teilnehmerstation
herzustellen, sobald an einer Teilnehmerstation ein
Sprachsignal vorliegt. Dies gilt vor allem für die Anwendung als Kinderzimmerüberwachung, wo jedes Geräusch
ohne Sprechtastenbetätigung zu einer vorgewählten Teilnehmerstation übermittelt werden soll. In diesem Fall
wird über den Schalter 8 nach Fig. 1 der Ausgang Q des
D-Flip-Flops 7f in der Spracherkennungsschaltung 7 mit
der Steuerlogik 1 verbunden. Das dort anstehende Signal
erfüllt dann dieselbe Funktion wie die Sprechtaste. Sobald das Mikrofon 13 ein Niederfrequenzsignal oberhalb
eines Mindestwertes abgibt, wird automatisch die vorgesehene zweite Teilnehmerstation angewählt und das Geräusch dort wiedergegeben. Der Abbruch der Verbindung
erfolgt über eine Zeitschaltung. Das um einige Sekunden
verzögerte Signal am Ausgang Q übernimmt die Funktion der
Ende-Taste. Damit gelangt die Trägerfrequenz nur dann auf
das Netz, wenn Geräusche übertragen werden sollen. Nach einigen Sekunden Ruhe ist das Netz wieder frei. Somit
werden durch Netzstörungen verursachte Störgeräusche
während der relativ langen Ruhezeiten nicht hörbar.

Wenn beide miteinander in Verbindung tretende Teilnehmerstationen sprachgesteuert sind, d.h. der Schalter 8
in beiden Teilnehmerstationen betätigt wird, ist ein
freies Wechselsprechen ohne manuelle Betätigung der Teilnehmerstationen möglich. Der Gesprächsrichtungswechsel
erfolgt dann sprachgesteuert.

Wie bereits erwähnt, sollen die Trägerfrequenzen in allen
Teilnehmerstationen exakt übereinstimmen. Dies kann z.B.
mit einer netzsynchronen Taktversorgungsschaltung nach
Fig. 6 erreicht werden. Diese besteht aus zwei hintereinander geschalteten Phase locked loop-Schaltungen (PLL-
Schaltungen). Die erste PLL-Schaltung besteht aus einem
Phasenkomparator, dem einerseits die Ausgangssignale des
Nulldurchgangsdetektors 20 und andererseits die Ausgangssignale eines Frequenzteilers 19e zugeführt werden. Der
Ausgang des Phasendetektors ist über ein RC- Glied 19b,
19c mit einem steuerbaren Oszillator 19d verbunden, der
ausgangsseitig wiederum den Teiler 19e steuert. Am Ausgang des frequenzsteuerbaren Oszillators 19d steht daher
eine Spannung mit einer Frequenz an, die um den Teilerfaktor des Teilers 19e höher ist  als die Netzfrequenz.
Diese Spannung weist eine feste Phasenbeziehung zur Netzspannung auf und wird als Referenzfrequenz für eine zweite PLL-Schaltung herangezogen. Dazu wird sie einem ersten Eingang eines Phasendetektors 19f zugeführt, dessen
zweiter Eingang mit dem Ausgang eines Teilers 19l verbunden ist. Der Ausgang des Phasendetektors 19f ist über
einen Widerstand 19g mit dem Eingang eines weiteren frequenzsteuerbaren Oszillators 19k verbunden, dessen Ausgang wiederum mit dem Eingang des Teilers 19l verbunden

ist. Dem Eingang des frequenzsteuerbaren Oszillators 19k wird außerdem über einen Verstärker 19h und einen Kondensator 19i das Ausgangssignal des Mikrofons 13 zugeführt. Damit wird eine Modulation der Trägerfrequenz erreicht.

Mit der dargestellten Schaltung erhält man eine Mittenfrequenz, die in einem festen Verhältnis zur Netzfrequenz steht und daher für alle Stationen gleich ist. Mit der ersten PLL-Schaltung kann beispielsweise die Netzfrequenz um den Faktor 96 auf 4,8 kHz hochgesetzt werden, die dann in der zweiten PLL-Schaltung nochmals um den Faktor 25 auf 120 kHz hochgesetzt wird.

Die Schaltung nach Fig. 1 enthält außerdem noch Schaltungen zur Verbesserung des Geräuschabstands und der Abhörsicherung, nämlich den Momentanwertkompander 14 und den Scrambler bzw. Descrambler 9.

Im Momentanwertkompander durchläuft das Sprachsignal vor der Aussendung einen Verstärker mit im Idealfall logarithmischer Verstärkercharakteristik, d.h. mit großer Verstärkung bei kleinen Signalen und mit geringer Verstärkung bei großen Signalen. Beim Empfang bzw. bei der Wiedergabe wird diese bewußt nichtlineare Signalverzerrung durch einen nichtlinearen Verstärker mit genau spiegelbildlicher Verstärkungscharakteristik wieder rückgängig gemacht. Durch die dabei auftretende, überproportionale Dämpfung kleiner Signale werden auf dem Übertragungsweg auftretende Störsignale, beispielsweise unvermeidbare Netzstörungen stark unterdrückt. Bei den bisher bekannten Geräten haben derartige Störungen besonders bei leisem Sprechen und in Pausen die Übertragungsqualität erheblich beeinträchtigt.

0128416

Die logarithmische Kennlinie kann durch eine Knickkennlinie nach Fig. 7 für den Sendevorgang bzw. Fig. 8 für
den Empfang angenähert werden. Die Knickkennlinie nach
Fig. 7 läßt sich mit einem entsprechend beschalteten
Operationsverstärker 14a nach Fig. 9 realisieren. Der
Operationsverstärker 14a weist in einem Rückkopplungszweig zwei in Reihe geschaltete Widerstände 14c, 14d
auf, wobei der Widerstand 14d von der Antiparallelschaltung zweier Dioden 14e und 14f überbrückt ist.
Das Eingangssignal wird dem Operationsverstärker über
einen Widerstand 14b zugeführt. Solange die an der
Antiparallelschaltung der Dioden 14e und 14f anstehende
Spannung deren Schwellspannung nicht überschreitet, ist
als Rückkopplungswiderstand die Reihenschaltung der
Widerstände 14c und 14d wirksam. Wird die Schwellspannung der Dioden 14i und 14f überschritten, so ist nur
noch der Widerstand 14c wirksam, so daß die Verstärkung
ab einem durch die Schwellspannung der Dioden 14e und
14f vorgegebenen Knickpunkt kleiner wird.

Die Knickkennlinie nach Fig. 8 kann mit einer Schaltung
nach Fig.10 realisiert werden. Dabei weist ein Operationsverstärker 14g nur einen Rückkopplungswiderstand
14m auf. Dem Eingang des Operationsverstärkers 14g ist
die Parallelschaltung eines Widerstandes 14k und zweier antiparallel geschalteter Dioden 14i, 14h vorgeschaltet. In Reihe zu dieser Parallelanordnung liegt ein
weiterer Widerstand 14l. Bei dieser Anordnung ist als
Eingangswiderstand die Reihenschaltung der Widerstände
14l und 14k wirksam, solange die an der Antiparallelschaltung der Dioden 14i und 14h anstehende Spannung
deren Schwellspannung nicht übersteigt. Die Verstärkung
ist daher zunächst gering. Wird dagegen die genannte
Schwellspannung überschritten, so wird der Widerstand
14k überbrückt und aufgrund des kleineren wirksamen
Eingangswiderstands die Verstärkung erhöht.

Mit dem dargestellten Momentanwertkompander wird nicht
nur eine Verbesserung des Geräuschabstands, sondern auch
der Abhörsicherheit erreicht. Mit einem Fremdgerät, das
den passenden Kompander nicht hat, kann das komprimierte
Signal nämlich nur sehr stark verzerrt abgehört werden.
Eine weitere Verbesserung der Abhörsicherheit kann mit
einem sogenannten Scrambler erreicht werden. Dabei wird
das Sprachsignal mit einer Taktfrequenz von 50 Hz oder
einem Vielfachen davon analog invertiert, und zwar netzsynchron zu Zeitpunkten, deren Abstand vom Nulldurchgang
der Netzspannung durch den Hauscode bestimmt ist. Ein
solches Signal kann im Descrambler nur entzerrt werden,
wenn dieser auf die richtigen Zeitpunkte eingestellt
ist. Eine Entzerrung ist also nur mit einer Teilnehmerstation möglich, die den gleichen Hauscode hat. Ein
Scrambler bietet also nicht nur eine Verbesserung der
Abhörsicherheit durch Fremdgeräte, sondern auch durch
gleichartige Geräte mit anderem Hauscode. Scrambler und
Descrambler sind nur dann in Betrieb, wenn der Schalter
10 nach Bild 1 geschlossen ist.

22 Patentansprüche
10 Figuren

0128416

Patentansprüche

1. Anordnung zur vermittelbaren Übertragung von Tonsignalen zwischen mehreren, mit einer Übertragungsleitung verbundenen Teilnehmerstationen, wobei die Übertragung von Tonsignalen und Steuersignalen durch Trägerfrequenzmodulation erfolgt, d a d u r c h  g e k e n n z e i c h - n e t ,  daß als Übertragungsleitung das Stromnetz verwendet wird und daß die Tonsignale durch Frequenzmodulation der Trägerfrequenz und die Steuersignale durch Amplitudenmodulation derselben Trägerfrequenz übertragen werden.

2. Anordnung nach Anspruch 1, d a d u r c h  g e k e n n z e i c h n e t ,  daß zum Aufbau einer Sprechverbindung eine erste Teilnehmerstation in einem Suchvorgang ein Steuersignal mit einem Adreßcode für eine gewünschte zweite Teilnehmerstation sendet, daß die den zutreffenden Adreßcode empfangende Teilnehmerstation ein Quittungssignal sendet, sofern die Übertragungsleitung nicht belegt ist und daß die Verbindung endgültig aufgebaut wird, wenn in der zweiten Teilnehmerstation ein Rückruf ausgelöst wird.

3. Anordnung nach Anspruch 2, d a d u r c h  g e k e n n z e i c h n e t ,  daß jedes Steuersignal außer einem frei wählbaren Adreßcode auch einen einstellbaren Hauscode aufweist, der die Verbindungsmöglichkeit auf eine Teilnehmergruppe mit demselben Hauscode begrenzt.

4. Anordnung nach Anspruch 3, d a d u r c h  g e k e n n z e i c h n e t ,  daß die Bedeutung jedes Steuersignals durch die Kombination von Hauscode und Adreßcode sowie entsprechender Pausen festgelegt ist.

5. Anordnung nach Anspruch 4,    d a d u r c h
g e k e n n z e i c h n e t ,    daß die Bedeutung jedes
Steuersignals wie folgt festgelegt ist:

a) Hauscode und Adreßcode werden gesendet während des
   Suchvorganges und zur Quittierung;
b) eine Pause (anstelle des Hauscode) und Adreßcode werden gesendet, um die Sprechberechtigung zu wechseln;
c) Hauscode und eine Pause (anstelle des Adreßcode) werden gesendet, um die Verbindung abzubrechen.

6. Anordnung nach einem der Ansprüche 1 bis 5,    d a -
d u r c h    g e k e n n z e i c h n e t ,    daß die
Steuersignale jeweils in der Umgebung der Netzspannungsnulldurchgänge gesendet werden.

7. Anordnung nach einem der Ansprüche 1 bis 6,    d a -
d u r c h    g e k e n n z e i c h n e t ,    daß während
einer Sprechverbindung der frequenzmodulierte Träger kurzzeitig unterbrochen wird und daß die auf Empfang geschaltete Teilnehmerstation während der Unterbrechungszeit
Steuersignale senden kann.

8. Anordnung nach Anspruch 7,    d a d u r c h
g e k e n n z e i c h n e t ,    daß die Unterbrechung
des frequenzmodulierten Trägers erfolgt, wenn sowohl die
Amplitude des Tonsignals als auch ihr zeitlicher Differentialquotient klein ist.

9. Anordnung nach Anspruch 8,    d a d u r c h
g e k e n n z e i c h n e t ,    daß das Tonsignal und
das differenzierte Tonsignal gleichgerichtet werden,
daß die gleichgerichteten Signale addiert werden und daß
das Summensignal in einem Komparator (7e) mit einem Mindestwert verglichen wird, wobei die Unterbrechung des frequenzmodulierten Trägers erfolgt, wenn das Summensignal unter dem Mindestwert liegt.

10. Anordnung nach Anspruch 9, d a d u r c h g e k e n n z e i c h n e t , daß der Mindestwert abhängig von der Einstellung eines Lautstärkeeinstellers (12) der betreffenden Teilnehmerstation ist.

11. Anordnung nach Anspruch 9, d a d u r c h g e k e n n z e i c h n e t , daß der Mindestwert nach jeder Unterbrechung des frequenzmodulierten Trägers zeitabhängig erhöht wird, indem der Vergleichseingang des Komparators (7e) mit einem über einen Widerstand (7g) aufladbaren Kondensator (7h) verbunden ist.

12. Anordnung nach Anspruch 11, d a d u r c h g e k e n n z e i c h n e t , daß dem Komparator (7e) ein D-Flip-Flop (7f) nachgeschaltet ist, dessen Setzeingang mit dem Komparator (7e) verbunden ist und dessen Steuereingang in dem Zeitbereich angesteuert wird, in dem Steuersignale zugelassen werden, daß der Setzausgang des D-Flip-Flops (7f) die Unterbrechung des frequenzmodulierten Trägers steuert und daß der Rücksetzeingang des D-Flip-Flops (7f) über eine Diode (7i) mit dem Kondensator (7h) verbunden ist.

13. Anordnung nach einem der Ansprüche 2 bis 12, d a - d u r c h g e k e n n z e i c h n e t , daß der Suchvorgang bzw. Rückruf der Teilnehmerstationen ausgelöst werden, wenn das vorhandene Sprachsignal eine vorgegebene Amplitude übersteigt.

14. Anordnung nach Anspruch 12 und 13, d a d u r c h g e k e n n z e i c h n e t , daß der Suchvorgang bzw.

Rückruf durch einen Ausgang des D-Flip-Flops (7f) ausgelöst wird und daß das Abbrechen der Verbindung durch ein Zeitglied gesteuert wird.

15. Anordnung nach einem der Ansprüche 1 bis 14, d a durch gekennzeichnet, daß jede Teilnehmerstation mindestens eine Sprechtaste (5) und eine Ende-Taste (6) aufweist, wobei mit der Sprechtaste (5) eine Sprechverbindung aufgebaut bzw. ein Rückruf ausgelöst wird und mit der Ende-Taste (6) eine bestehende Verbindung abgebrochen wird.

16. Anordnung nach Anspruch 15, d a d u r c h gekennzeichnet, daß im Wechselsprechbetrieb die Sprechberechtigung durch Antippen der Sprechtaste (5) der betreffenden Teilnehmerstation aufgebaut wird und solange besteht, bis entweder bei der verbundenen Teilnehmerstation die Sprech-Taste (5) gedrückt wird oder bei einer der beiden miteinander verbundenen Teilnehmerstationen die Ende-Taste (6) gedrückt wird.

17. Anordnung nach einem der Ansprüche 1 bis 16, d a durch gekennzeichnet, daß das Tonsignal vor der Aussendung über einen Verstärker (14) mit logarithmischer Verstärkungscharakteristik und beim Empfang über einen Verstärker (14) mit spiegelbildlicher Verstärkungscharakteristik geführt wird.

18. Anordnung nach Anspruch 17, d a d u r c h gekennzeichnet, daß die logarithmische Kennlinie durch eine Knicklinie angenähert wird.

19. Anordnung nach einem der Ansprüche 3 bis 18, d a durch gekennzeichnet, daß das Tonsignal beim Senden im Netzrhythmus invertiert wird, und zwar netzsynchron zu Zeitpunkten, deren Abstand vom

0128416

Nulldurchgang der Netzspannung durch den Hauscode bestimmt ist und daß beim Empfang die Inversion wieder rückgängig gemacht wird.

20. Anordnung nach einem der Ansprüche 1 bis 19,  d a - d u r c h   g e k e n n z e i c h n e t ,  . daß die Trägerfrequenzen in allen Teilnehmerstationen von der Netzfrequenz abgeleitet werden.

21. Anordnung nach Anspruch 20,  d a d u r c h g e k e n n z e i c h n e t ,  daß die Ableitung mit einer PLL-Schaltung mit einem Frequenzteiler (19c, 191) im Rückkopplungszweig erfolgt.

22. Anordnung nach einem der Ansprüche 1 bis 21,  d a - d u r c h   g e k e n n z e i c h n e t ,  daß jede Teilnehmerstation zwei Lichtsignale (2) aufweist, wobei das erste Lichtsignal aufleuchtet, solange die zugeordnete Teilnehmerstation Sprechberechtigung hat, wobei das zweite Lichtsignal aufleuchtet, solange die betreffende Teilnehmerstation Verbindung mit einer zweiten Teilnehmerstation hat, sofern diese zweite Teilnehmerstation Sprechberechtigung hat und daß beide Lichtsignale zur Bildung eines Mischlichts während des Aufbaus einer Verbindung aufleuchten.

FIG 1

Hauscode        Adresscode

FIG 2

FIG 3

FIG 5

FIG 4

0128416

4/4          83 P 3173

FIG 6

FIG 7

FIG 8

FIG 9

FIG 10